**Europäisches Patentamt**

**European Patent Office**

**Office européen des brevets**

(11) Veröffentlichungsnummer : **0 079 425**
**B1**

(12)

# EUROPÄISCHE PATENTSCHRIFT

(45) Veröffentlichungstag der Patentschrift :
20.02.85

(51) Int. Cl.⁴ : **B 65 G   1/12**

(21) Anmeldenummer : **82106765.9**

(22) Anmeldetag : **27.07.82**

(54) Speicher für Packungen.

(30) Priorität : **24.09.81 DE 3137948**

(43) Veröffentlichungstag der Anmeldung :
**25.05.83 Patentblatt 83/21**

(45) Bekanntmachung des Hinweises auf die Patenterteilung : **20.02.85 Patentblatt 85/08**

(84) Benannte Vertragsstaaten :
**BE FR GB IT NL SE**

(56) Entgegenhaltungen :
**DE-A- 2 402 855**
**DE-A- 2 640 867**

(73) Patentinhaber : **Maschinenfabrik Alfred Schmermund**
**Brüggerfelder Strasse 16-18 Postfach 2060**
**D-5820 Gevelsberg (DE)**

(72) Erfinder : **Klingenberg, Uwe, Ing. grad.**
**Im Anger 18**
**D-5820 Gevelsberg (DE)**

(74) Vertreter : **Dipl.-Ing. H. Marsch Dipl.-Ing. K. Sparing**
**Dipl.-Phys. Dr. W.H. Röhl Patentanwälte**
**Rethelstrasse 123**
**D-4000 Düsseldorf (DE)**

## Beschreibung

Die Erfindung betrifft einen Speicher zur zeitweiligen Aufnahme quaderförmigen Packungen, insbesondere Zigarettenpackungen, welche mittels eines Gurtförderers von einer Abgabestation zu einer Aufnahmestation transportiert werden, und zur bedarfsweisen Wiedergabe der gespeicherten Packungen an diesen Gurtförderer.

Bei der heute üblichen Direktkopplung von Herstell- und Weiterverarbeitungsmaschinen sind derartige Speicher von Vorteil, um eine Stillstandzeit der einen oder anderen Maschine überbrücken zu können. Steht die nachgeschaltete Maschine, so muß der Speicher die von der Vormaschine gelieferten Packungen aufnehmen, im umgekehrten Fall muß er gespeicherte Packungen abgeben. Um für beide Funktionen betriebsbereit zu sein, soll mithin der Speicher im allgemeinen etwa halb gefüllt sein.

Speicher verschiedener Bauart sind bekannt. In einigen werden die Packungen aufeinander gestapelt (DE-PS 14 56 503) ; dies ist jedoch insbesondere bei Zigaretten-Weichpackungen wegen des zunehmenden Drucks auf die Packungen der untersten Lage ungünstig. Bei anderen Speichern sind endlose umlaufende Gurte oder Ketten vorgesehen, welche Speicherzellen tragen, in die jeweils eine Reihe Packungen eingeschoben wird (GB-PS 1 475 773). Dies hat jedoch den Nachteil, daß aufwendige Einrichtungen zum Ein- und Ausschieben von Packungsreihen notwendig sind.

Um diesen Aufwand zu vermeiden, sind Speicher konstruiert worden, bei denen ein Speichergurt selbst den Einzug bzw. Ausschub der Packungsreihen übernimmt (DE-OS 26 40 867). Nachteilig hierbei ist jedoch der relativ große Platzbedarf, insbesondere oberhalb des Förderers, da durch eine solche Anordnung dem Bedienungspersonal die Sicht auf die zu beaufsichtigenden Maschinen ganz oder teilweise versperrt wird. Deshalb wurde eine raumsparende Lösung bekannt, bei der Packungsreihen auf einer Vielzahl neben- und übereinander angeordneter Speicherwalzen gespeichert werden (DE-OS 24 02 855). Hierbei werden jedoch die Packungen durch die ständige Übergabe von einer auf die andere Speicherwalze über Gebühr beansprucht.

Eine weitere Möglichkeit, Raum zu sparen, ist in der DE-OS 30 25 527 beschrieben. Hier werden Packungsreihen auf einzelne Trägerelemente aufgebracht, deren Abstand so veränderbar ist, daß an der Aufnahme- bzw. Abgabestelle genügend Platz zum Bewegen der Packungen ist, im übrigen aber eine kompakte Speicherung erfolgt. Hierfür sind allerdings wieder recht aufwendige mechanische Einrichtungen erforderlich, und außerdem ist der Platzbedarf über dem Packungsförderer immer noch recht groß, was aus den obengenannten Gründen nicht wünschenswert ist.

Aufgabe der Erfindung ist es, einen Speicher nach dem Oberbegriff des Anspruchs 1 zu schaffen, welcher die Packungen nur wenig mechanisch beansprucht, keine Zusatzeinrichtungen zum Ein- und Ausschieben der Packungen benötigt und einen möglichst geringen Raum einnimmt, insbesondere möglichst wenig über den Packungsförderer hinausragt.

Die Lösung dieser Aufgabe ergibt sich aus dem Anspruch 1. Weitere Ausgestaltungen der Erfindung ergeben sich aus der nachfolgenden Beschreibung und den Unteransprüchen.

Eine bevorzugte Ausführungsform der Erfindung wird nachstehend im Zusammenhang mit den beigefügten Abbildungen näher erläutert.

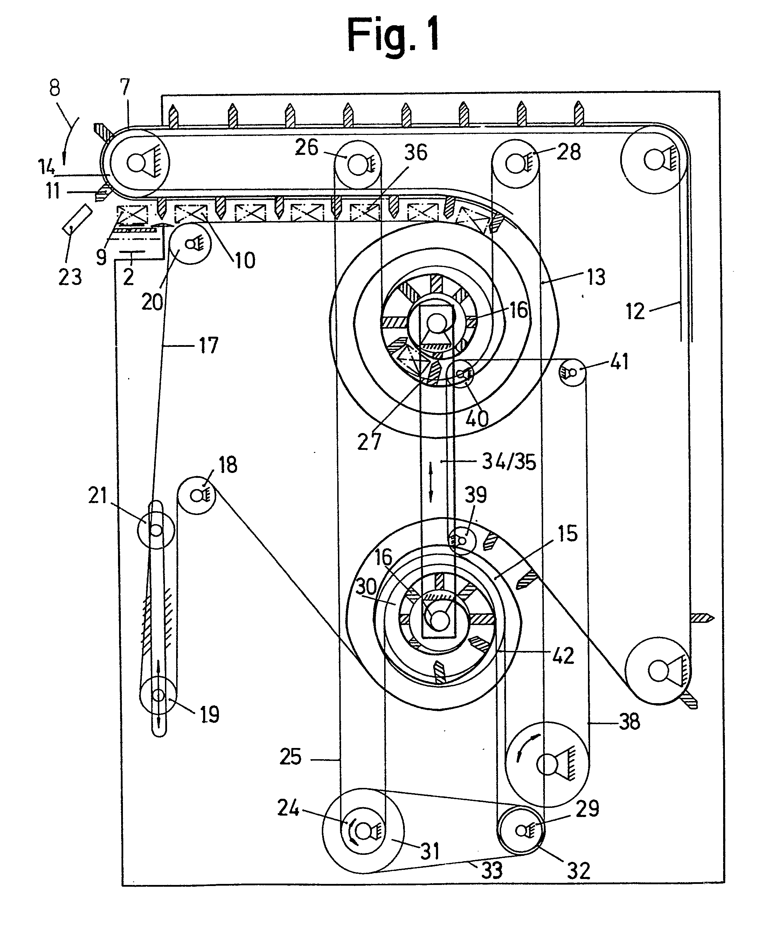

Figur 1 stellt, weitgehend schematisch, einen Schnitt durch einen Speicher, gesehen in Laufrichtung eines ersten Förderers, dar.

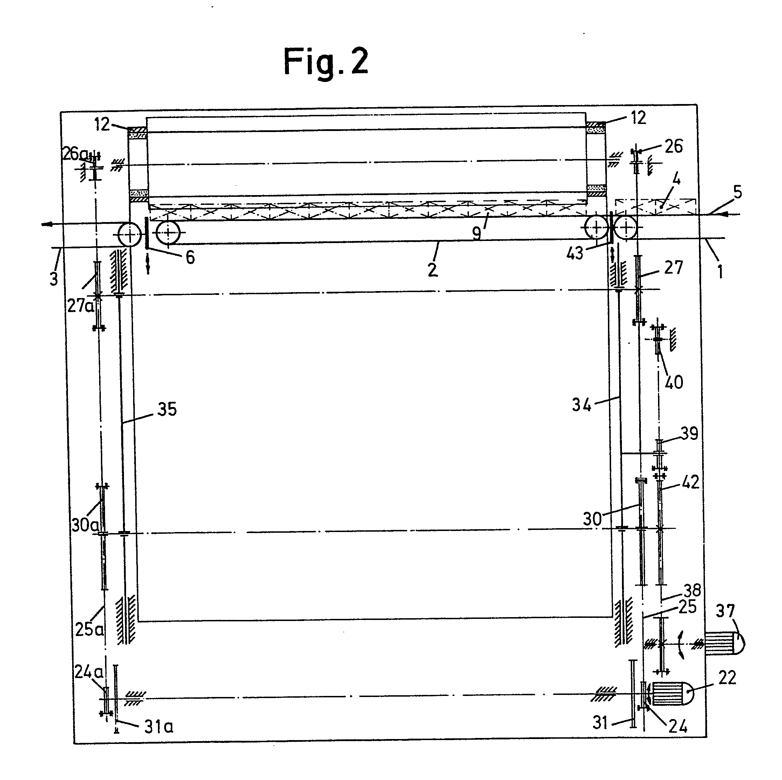

Figur 2 ist eine Seitenansicht des Speichers nach Fig. 1, ebenfalls stark vereinfacht.

Figur 3 zeigt einen Schnitt durch eine Wickelrolle mit der Übergangsstelle zwischen leistenbesetztem und glattem Gurtteil.

Auf Gurtförderern 1, 2 und 3 werden Päckchen 4 in Richtung des Pfeiles 5 vor einen Speicher vorbeigefördert. Vor- und nachgeschaltete Maschinen, z. B. Zigarettenpacker mit einer Maschine zum Einhüllen der Päckchen 4 in Klarsichtfolie und einem Gebindepacker, sind nicht dargestellt. Um aus der Folge der geförderten Päckchen 4 eine Päckchenreihe 9 abzuteilen, wird eine Sperre 6 angehoben ; aus diesem Grund sind auch die drei Gurtförderer 1 bis 3 hintereinandergesetzt. Dann wird ein Speichergurt 7 in Richtung des Pfeiles 8 um eine Teilung, das heißt den Abstand zwischen zwei Leisten 11, weitergeschaltet. Die Päckchenreihe 9, hier aus acht Päckchen bestehend, gelangt so in die mit 10 bezeichnete Position. Der Speichergurt 7 ist in einem Abstand, der etwas größer ist als die Päckchenreihe 9, mit den Leisten 11 versehen, außerdem trägt er beidseitig Distanzhalter 12, und zwar in dem Längenbereich, in dem auch Leisten 11 vorhanden sind. Der Speichegurt 7 ist nämlich nicht auf seiner ganzen Länge mit Leisten 11 und Distanzhaltern 12 bestückt ; denn wenn der beim Aufspulen des Speicherguts gebildete Aufnahmewickel 13 voll ist, sind von einer Rolle 14 an bis zu einem Vorratswickel 15 keine Leisten 11 mehr erforderlich, da dieses Stück des Speichergurtes 7 für Speicherzwecke nicht benutzbar ist. Andererseits braucht der Speichergurt 7, wenn der Aufnahmewickel 13 ganz leer ist, von diesem bis zur Position 10 keine Leisten.

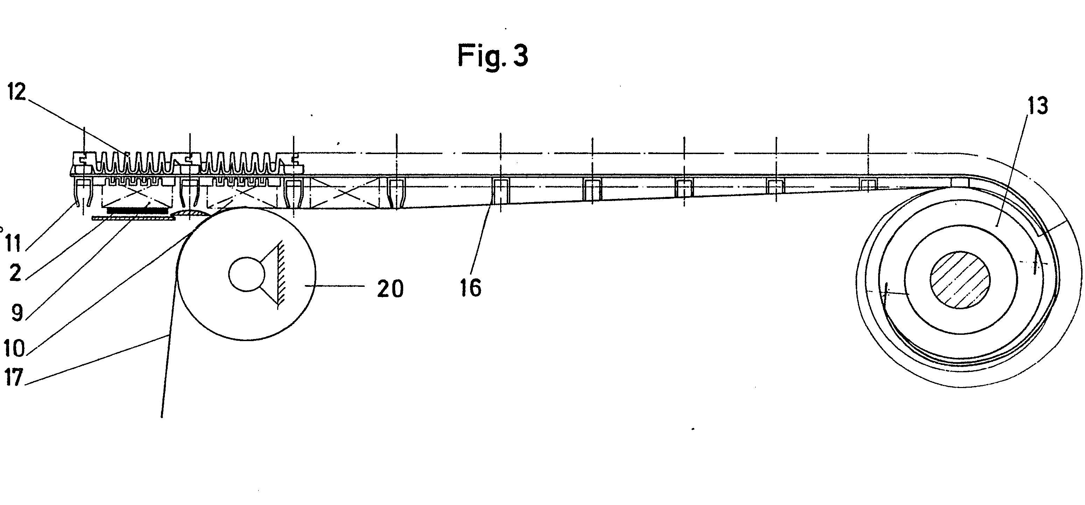

Um beim Übergang vom glatten Gurtabschnitt zum leistenbesetzten Gurtteil eine einigermaßen runde Form der Wickel 13, 15 zu erreichen, sind als Übergang Hilfsstege 16 vorgesehen. Diese sind in einem Bereich angeordnet, der dem Umfang der Wickel 13, 15 in dieser Situation entspricht. Wie Fig. 3 zeigt, nimmt die Höhe der Hilfsstege 16 schrittweise ab. Auf diese Weise wird der Enddurchmesser beider Wickel 13, 15 minimal gehalten.

In der mit 10 bezeichneten Position befindet sich die Päckchenreihe auf einem glatten Hilfsgurt 17.

Der Hilfsgurt 17 ist auf dem Vorratswickel 15 mit aufgewickelt und wird über Rollen 18, 19, 20 zum Aufnahmewickel 13 geführt, wo er mit eingerollt wird. Die Rolle 19 ist bis zur Position 21 verschiebbar und dient dem Längenausgleich.

Der Antrieb des Aufnahmewickels 13 erfolgt durch einen Motor 22, vorzugsweise ein Druckluftmotor. Die Steuerung des Motors 22, der zum Einziehen oder Ausgeben der Päckchen schrittweise arbeiten muß, erfolgt über einen Initiator 23. Der Motor 22 treibt über ein Kettenrad 24 eine Kette 25 an, welche über Kettenräder 26, 27, 28, 29, 30 geführt ist. Hierbei sind die Kettenräder 26, 28 und 29 stationär angeordnet, Kettenrad 27 treibt den Aufnahmewickel 13 an, und Kettenrad 30 läuft auf der Welle des Vorratswickels 15 lose mit. Diese Anordnung ist natürlich beidseitig vorgesehen, die entsprechenden Positionen tragen den Index a. Mit den Kettenrädern 24 bzw. 29 sind ungleichen Teilkreisdurchmesser besitzende Kettenräder 31 bzw. 32 jeweils starr verbunden. Diese wiederum sind durch eine Kette 33 gekoppelt. Durch die Übersetzung zwischen Kettenrad 31 und Kettenrad 32 ergibt sich zwischen den Kettenabschnitten, welche über Kettenrad 27 bzw. Kettenrad 30 geführt sind, eine Längendifferenz, welche eine Hub- bzw. Senkbewegung der durch Stege 34 und 35 verbundenen Achsen der Wickel 13 und 15 hervorruft.

Die Stege 34 und 35 sind verschieblich gelagert. Die Übersetzung zwischen Kettenrad 31 und Kettenrad 32 ist dabei so gewählt, daß die Lage der obersten Päckchenreihe im Vorratswickel 13, hier mit 36 bezeichnet, im wesentlichen konstant bleibt.

Der Antrieb des Vorratswickels 15 erfolgt durch einen Motor 37, ebenfalls vorzugsweise ein Druckluftmotor (es kann aber z. B. auch ein Drehfeldmagnet verwendet werden) über eine Kette 38, welche über Umlenkräder 39, 40 und 41 geführt ist und über ein Rad 42 den Vorratswickel 15 antreibt. Der Motor 37 wird nicht gesteuert ; er dient lediglich dazu, den Speichergurt 7 gespannt zu halten und, wenn erforderlich, auf den Vorratswickel 15 aufzuwickeln. Dazu genügt es, ein in etwa konstantes Drehmoment aufzubringen.

Zum Entspeichern von Päckchenreihen wird eine Sperre 43 angehoben und dadurch auf dem Gurt des Gurtförderers 2 Platz geschaffen.

Die Laufrichtung des Speichergurtes 7 wird umgekehrt und eine Päckchenreihe kann ausgeschoben werden.

**Ansprüche**

1. Speicher für Packungen (4) mit einem Gurtförderer (2), welcher die Packungen (4) in einer kontinuierlichen Folge bewegt, einer Einrichtung (6) zum Abteilen einzelner Packungsreihen (9) aus dieser Folge und einem Speicherförderer (7), welcher die Packungsreihen (9) unmittelbar vom Gurtförderer (2) aufnimmt und bei Bedarf auf diesem wieder absetzt, wobei der Speicherförderer (7) als Gurt mit Stegen (11) ausgebildet ist, die einseitig offene Abteile zur Aufnahme einzelner Packungsreihen (9) begrenzen, dadurch gekennzeichnet, daß der Speicherförderer (7) zusammen mit den zwischen den Stegen (11) befindlichen Packungsreihen (9) spiralförmig auf eine Wickelrolle als Aufnahmewickel (13) auf- bzw. von dieser abwickelbar ist, wobei die Packungsreihen (9) in radial geschlossenen Abteilen gespeichert sind, welche zwischen aufeinanderfolgenden Windungen des Speicherförderers (7) gebildet werden.

2. Speicher nach Anspruch 1, dadurch gekennzeichnet, daß ein Flachgurt (17) vorgesehen ist, der die Packungen (4) auf der Strecke zwischen dem Gutförderer (2) und der Wickelrolle für den Aufnahmewickel (13) abstüzt und zusammen mit dem Speicherförderer (7) auf die Wickelrolle aufwickelbar ist.

3. Speicher nach Anspruch 1 oder 2, dadurch gekennzeichnet, daß eine Wickelrolle für einen Vorratswickel (15) vorgesehen ist, von der bzw. auf die der nicht mit Packungsreihen besetzte Teil des Speicherförderers (7) als Vorratswickel (15) ab- bzw. -aufwickelbar ist.

4. Speicher nach einem der Ansprüche 1 bis 3, dadurch gekennzeichnet, daß der Speicherförderer (7) mit Distanzstücken (12) versehen ist, deren Höhe größer ist als die Höhe der Packungen (4) und der Stege (11).

5. Speicher nach einem der Ansprüche 1 bis 4, dadurch gekennzeichnet, daß der Speicherförderer (7) nur auf der als Speicherkapazität nutzbaren Länge mit Stegen (11) besetzt ist und im Übergangsbereich von der mit Stegen (11) besetzten Länge zu glatten Endlängen Hilfsstege (16) vorgesehen sind, deren Höhe schrittweise abnimmt und die auf eine solche Länge des Übergangsbereichs verteilt sind, wie sie dem Wickelrollenumfang beim Aufwickeln seiner Länge entspricht.

6. Speicher nach einem der Ansprüche 1 bis 5, dadurch gekennzeichnet, daß die Lager beider Wickelrollen auf einem gemeinsam derart verschieblichen Bock (34, 35) angeordnet sind, daß der tangentiale Einlaufbereich des Speicherförderers (7) auf die Wickelrolle für den Aufnahmewickel (13) stets auf etwa gleicher Höhe gehalten wird.

7. Speicher nach einem der Ansprüche 1 bis 6, dadurch gekennzeichnet, daß die Wickelrollen für den Aufnahmewickel (13) und den Vorratswickel (15) durch Druckluftmotoren (22, 37) antreibbar sind.

8. Speicher nach einem der Ansprüche 1 bis 6, dadurch gekennzeichnet, daß die Wickelrolle für den Vorratswickel (15) durch einen Drehfeldmagneten antreibbar ist.

9. Speicher nach einem der Ansprüche 1 bis 8, dadurch gekennzeichnet, daß die Drehbewegung der Wickelrolle für den Aufnahmewickel (13) und die Verschiebebewegung beider Wickelrollen von einem gemeinsamen Antrieb (24) abgeleitet sind.

10. Speicher nach einem der Ansprüche 1 bis 9, dadurch gekennzeichnet, daß die schrittweise Drehbewegung der Wickelrolle für den Aufnahmewickel (13) durch einen Initiator (23) steuerbar ist, der die relative Stellung der Stege (11) des Speicherförderers (7) zum Gurtförderer (2) überwacht.

11. Speicher nach einem der Ansprüche 1 bis 10, dadurch gekennzeichnet, daß eine Tänzerwalze (19) zum Gespannthalten des Flachgurts (17) vorgesehen ist.

## Claims

1. Store for packages (4) with a belt conveyor (2) which moves the packages (4) in a continuous sequence, an arrangement (6) for dividing off individual rows (9) of packages from this sequence and a store-conveyor (7) which picks up the rows of packages (9) directly from the belt conveyor (2) and, when required, replaces them on the said belt, the store conveyor (9) being constructed as a belt with cross webs (11) which define unilaterally open compartments to hold individual rows of packages (9), characterised in that the store conveyor (7), together with the rows of packages (9) disposed between the webs (11), can be wound spirally onto and unwound from a take-up or pay-out roller (13), the rows of packages (9) being stored in radially closed compartments which are formed between successive turns of the store conveyor (7).

2. Store according to Claim 1, characterised in that a flat belt (17) is provided which supports the packages (4) on the path between the belt conveyor (2) and the winding roller for the take-up roller (13), and can be wound onto the winding roller together with the store conveyor (7).

3. Store according to Claim 1 or 3, characterised in that a winding roller is provided for a supply reel (15) from or onto which it is possible to unwind or wind that part of the store conveyor (7) which is not carrying rows of packages, to serve as a supply reel (15).

4. Store according to one of Claims 1 to 3, characterised in that the store conveyor (7) is provided with spacers (12), the height of which is greater than the height of the packages (4) and of the webs (11).

5. Store according to one of Claims 1 to 4, characterised in that the store conveyor (7) is only provided with webs (11) over a length which can be utilised as storage capacity while in the transition zone from the length occupied by webs (11) to the smooth end lengths, there are auxiliary webs (16), the height of which diminishes gradually and which are distributed over such a length of the transition zone as corresponds to the circumference of the winding roller when its length is being wound up.

6. Store according to one of Claims 1 to 5, characterised in that the bearings of both winding rollers are dispoesed on a jointly so displaceable support (34, 35) that the tangential intake zone of the store conveyor (7) onto the winding roller for the take-up roll (13) is always maintained at substantially the same height.

7. Store according to one of Claims 1 to 6, characterised in that the winding rollers for the take-up roll (13) and the stock roll (15) can be driven by compressed air motors (22, 27).

8. Store according to one of Claims 1 to 6, characterised in that the winding roller for the stock roll (15) can be driven by a rotary field magnet (9).

9. Store according to one of Claims 1 to 8, characterised in that the rotary motion of the winding roller for the take-up roll (13) and the displacement movement of both winding rollers are derived from a common drive (24).

10. Store according to one of Claims 1 to 9, characterised in that the stepwise rotary motion of the winding roller for the take-up roll (13) can be controlled by an initiator (23) which monitors the relative position of the webs (11) of the store conveyor (7) in relation to the belt conveyor (2).

11. Store according to one of Claims 1 to 10, characterised in that an idler roller (19) is provided to keep the flat belt (17) in a tensioned condition.

## Revendications

1. Dispositif de stockage pour paquets (4) comportant une bande de transport (2) qui fait déplacer les paquets en continu, un dispositif (6) de prélèvement sur cette suite de cartouches (9) et un transporteur de stockage (7) qui prélève directement sur la bande de transport (2) les cartouches (9), et, en cas de besoin, les remet sur la bande de transport, le transporteur de stockage (7) en forme de bande étant muni de barrettes (11) et présentant d'un côté des sections libres, sans barrettes, destinées à recevoir les cartouches, caractérisé par le fait que le transporteur de stockage (7), en même temps que les cartouches (9) qui se trouvent entre les barrettes (11), est déroulable ou enroulable, suivant une spirale, sur un rouleau servant de bobine réceptrice (13), les cartouches (9) étant stockées dans des compartiments radialement fermés qui sont formés entre les couches successives d'enroulement du transporteur de stockage (7).

2. Dispositif suivant la revendication 1, caractérisé par le fait qu'une bande plate (17) est prévue pour contenir les paquets (4) sur le parcours entre la bande transporteuse (2) et le rouleau de la bobine réceptrice (13) et être enroulée simultanément avec le transporteur de stockage (7), sur le rouleau.

3. Dispositif suivant la revendication 1 ou 2, caractérisé par le fait qu'un enrouleur est prévu comme bobine de réserve (15), duquel ou sur lequel la partie du transporteur de stockage (7) non remplie de cartouches peut être déroulée ou enroulée de manière à former ainsi une bobine de réserve (15).

4. Dispositif suivant l'une des revendications 1 à 3, caractérisé par le fait que le transporteur de stockage (7) est équipé d'éléments d'entretoisement (12) dont la hauteur est supérieure à celle des paquets (4) et des barrettes (11).

5. Dispositif suivant l'une des revendications 1 à 4, caractérisé par le fait que le transporteur de stockage (7) est équipé de barrettes (11) uniquement sur la longueur utilisable pour le stockage et par le fait que sur la fraction intermédiaire entre la partie munie de barrettes (11) et la fraction finale plate sont prévues des barrettes auxiliaires (16) dont la hauteur diminue de l'une à l'autre et qui sont réparties sur une longueur de la fraction intermédiaire correspondant au périmètre d'enroulement.

6. Dispositif suivant l'une des revendications 1 à 5, caractérisé en ce que les paliers des deux dispositifs enrouleurs sont montés sur des supports (34, 35) déplaçables simultanément de façon telle que l'arrivée tangentielle du transporteur de stockage (7) sur le rouleau de la bobine réceptrice (13) est maintenue constamment sensiblement à la même hauteur.

7. Dispositif suivant l'une des revendications 1 à 6, caractérisé par le fait que le rouleau de la bobine réceptrice (13) et de la bobine de réserve (15) peuvent être actionnés par des moteurs pneumatiques (22, 37).

8. Dispositif suivant l'une des revendications 1 à 6, caractérisé par le fait que le rouleau de la bobine de réserve (15) peut être actionné par un aimant à champ rotatif.

9. Dispositif suivant l'une des revendications 1 à 8, caractérisé par le fait que le mouvement de rotation du rouleau de la bobine réceptrice (13) et le mouvement de déplacement des deux rouleaux enrouleurs sont comandés à partir d'un organe d'entraînement commun (24).

10. Dispositif suivant l'une des revendications 1 à 9, caractérisé par le fait que le mouvement pas à pas du rouleau de la bobine réceptrice (13) est commandé par un détecteur (23) qui détecte la position relative des barrettes (11) du transporteur de stockage (7) par rapport à la bande transporteuse (2).

11. Dispositif suivant l'une des revendications 1 à 10, caractérisé par le fait qu'un rouleau oscillant (19) est prévu pour maintenir tendue la bande plate (17).

# Fig. 1

# Fig. 2

Fig. 3